# EUROPEAN PATENT APPLICATION

(11) **EP 4 664 679 A1**
(43) Date of publication of application: **17.12.2025**
(21) Application number: 24784404.6
(22) Date of filing: 03.04.2024
(51) Int. Cl.: H01Q 1/32, B32B 17/06, H01Q 1/38, B32B 33/00, B32B 3/08, B60J 7/00, B32B 7/12

(54) **GLASS ASSEMBLY AND VEHICLE**

(30) Priority: 06.04.2023 CN 202310358449
(71) Applicant: Fuyao Glass Industry Group Co., Ltd., Fuqing, Fujian 350300 (CN)
(72) Inventor: CHEN, Zhixing, Fuqing, Fujian 350300 (CN); HUANG, Xianqian, Fuqing, Fujian 350300 (CN)
(74) Representative: Patentanwälte Olbricht Buchhold Keulertz
(86) International application number: PCT/CN2024/086002
(87) International publication number: WO 2024/208322

(57) **Abstract**

A glass assembly and a vehicle. The glass assembly includes a glass body, an antenna, and a conductive layer. The antenna and/or the conductive layer are disposed on a surface of the glass assembly and/or are at least partially embedded in the glass assembly. windows are provided on the conductive layer on a same xy plane as the antenna and the conductive layer above the antenna along a z-axis, with a direction in which a signal is emitted from the antenna being set as an upward direction of the z-axis. An orthographic projection of the antenna onto each window is within an opening range of the corresponding window.

## Description

The present application claims priority to a Chinese Patent Application No. 202310358449.4, filed with the China National Intellectual Property Administration on April 6, 2023 and entitled "GLASS ASSEMBLY AND VEHICLE", which is incorporated in the present application by reference in its entireties.

### TECHNICAL FIELD

The present disclosure relates to a technical field of intelligent vehicle manufacturing, and particularly relates to a glass assembly including an antenna, and a vehicle.

### BACKGROUND

With the increasing application of new multifunctional glasses with functions such as sound insulation, heat insulation, and various types of dimming, a combination of glass has also changed from a previous simple combination of glass and PVB to deep integration of a conventional glass combination and metal or metal oxide film layers, which means that a metal shielded space is formed in a cabin of a vehicle. At the same time, with development of intelligent connected vehicles, traditional vehicle-mounted mobile antennas are being moved into the cabin of the vehicle due to limitations in styling, layout space, and the like, because of growing demands for wireless systems such as perception and network, demands for extreme styling from vehicle owners and vehicle makers, and widespread application of panoramic sunroofs(skylights). In this way, it is equivalent to achieve wireless interconnection with a free space outside in an all-metal shielded space. For this purpose, many solutions now adopt a method of directly opening a large enough window on a film layer to implement performance of the antenna and achieve wireless interconnection.

For the cabin of the vehicle, the shielding cavity formed is completely constituted by two parts, a metal structure frame and a combination of glass and a conductive layer (generally a metal film layer). Therefore, shortcomings of the windowing approach in vehicle glass in the related art are mainly as follows.
1. If a window is obtained by opening a hole in the metal bracket, it will inevitably lead to a change in a structural strength and even seriously affect safety of a vehicle body.
2. If a window is opened on the glass film layer, since a range of antenna operating frequency bands is very wide now, in order to adapt to all frequency bands, a relatively large window opening dimension is required, which will greatly decrease original functions of the film layer. For example, an effective heat insulation area becomes smaller due to an insufficient film layer area, thereby greatly decreasing a heat insulation effect.
3. Since shapes of different vehicle models are different, layouts of antennas are also different. In this way, the window itself is in an unstable state, resulting in the performance of the antennas being different in different vehicles, which also greatly weakens stability of related wireless systems.
4. Since achievement of performance of a glass antenna itself requires full consideration of a surrounding environment, both a glass substrate itself and an external environment around the glass may greatly affect the achievement of the performance of the antenna, which will make it impossible to give a minimum boundary of the antenna.

Therefore, a new method for windowing on glass assemblies including an antenna is required.

### SUMMARY

To solve the above problems, an objective of the present disclosure is to provide a glass assembly and a vehicle. The glass assembly can effectively restrict a signal propagation direction of an antenna through collaborative matching of the antenna and a conductive layer window, and effectively improve a radiation effect of the antenna without affecting functions of the conductive layer itself.

To achieve the above object, the present disclosure provides a glass assembly. The glass assembly includes a glass body, an antenna, and at least one conductive layer. The antenna is disposed on a surface of the glass assembly or at least partially embedded in the glass assembly. The conductive layer is disposed on the surface of the glass assembly and/or at least partially embedded in the glass assembly. A direction in which a signal is emitted from the antenna is denoted as an upward direction of a z-axis (that is, a direction in which a z-axis coordinate increases). A plane in which the antenna is located is an xy plane formed by an x-axis and a y-axis, and the conductive layer coplanar with the antenna in the xy plane of the glass body and the conductive layer above the antenna along the z-axis are provided with windows. An orthographic projection of the antenna onto each window is within an opening range of the window. The antenna includes a monopole antenna and/or a loop antenna. The window of the conductive layer which has a smallest vertical distance from the antenna along the z-axis is denoted as a first window. A minimum distance between each point on an edge of an orthographic projection of the monopole antenna onto the first window and an edge of the first window is 0.051 times to 0.162 times a wavelength corresponding to a designed frequency band of the monopole antenna. A minimum distance between each point on an edge of an orthographic projection of the loop antenna onto the first window and the edge of the first window is 0.162 times or less a wavelength corresponding to a designed frequency band of the loop antenna.

According to a specific embodiment of the present disclosure, the direction of the z-axis may be a propagation direction of a main beam of the antenna, and the upward direction of the z-axis is a direction in which a main beam signal is emitted from the antenna. In some specific embodiments, the propagation direction of the main beam of the antenna may be parallel to a thickness direction of the glass assembly, and the z-axis may also be parallel to the thickness direction of the glass assembly.

In the present disclosure, the orthographic projection refers to a projection along the z-axis direction.

It can be understood that the minimum distance between each point on the edge of the orthographic projection of the antenna onto the first window and the edge of the first window refers to a vertical distance between a point on the edge of the projection and the edge of the first window that is nearest to the point.

In the present disclosure, the surface of the glass assembly is not limited to the surface of the glass assembly exposed to the outside. When the glass assembly includes two or more pieces of glass, the surface of the glass assembly also includes surfaces of the glass assembly on an inner side. For example, when the glass assembly includes two pieces of glass, the surface of the glass assembly includes two surfaces exposed to the outside and two surfaces located inside the glass assembly.

In the present disclosure, the antenna is at least partially embedded in the glass assembly, which may include a case where at least a part of the antenna is located inside the glass assembly but not in direct contact with the surfaces of the glass assembly on the inner side (for example, there are other layer structures between the antenna and the surfaces of the glass assembly on the inner side), and may also include a case where at least a part of the antenna is embedded in a layer structure (such as the conductive layer, a photoelectric functional coating layer) in the glass assembly. The same applies to the conductive layer which is at least partially embedded in the glass assembly.

According to a specific embodiment of the present disclosure, the conductive layer and the antenna being disposed on the surface of the glass body is not limited to the conductive layer and the antenna being disposed on the same surface of the glass body, and also includes a case where the conductive layer and the antenna are disposed on different surfaces of the glass body. Generally, when the conductive layer and the antenna are located on the same surface of the glass body (in this case, the conductive layer and the antenna are located on the same xy plane), the antenna can be located inside the window of the conductive layer.

In the above-mentioned glass assembly, the glass body may include two or more glass plates, and in this case, the glass assembly is in a form of a laminated glass. Taking the case of two glass plates as an example, the glass body includes a first glass plate and a second glass plate, the first glass plate has a first surface and a second surface facing opposite directions, the second glass plate has a third surface and a fourth surface facing opposite directions, and the second surface faces the third surface. The antenna may be disposed adjacent to the fourth surface of the glass assembly or disposed between the second surface and the third surface (including a case of being in contact with the second surface and/or the third surface). In this case, the antenna may be in direct contact with the surface of the glass body, or may be separated from the surface of the glass body via a layer structure. Further, the antenna may be disposed on one of the second surface, the third surface, or the fourth surface. The conductive layer may be disposed adjacent to the fourth surface of the glass assembly, and/or, the conductive layer may be disposed between the second surface and the third surface (including the case of being disposed on the second surface and the third surface). Further, the conductive layer may be disposed on one of the second surface, the third surface and the fourth surface or a combination of two or more thereof.

According to a specific embodiment of the present disclosure, among all the conductive layers of the glass assembly, at least the conductive layer located coplanar with the antenna in the xy plane and the conductive layer above the antenna along the z-axis direction are disposed with windows to reduce a shielding effect of the conductive layers on the signal and achieve effective constraint of electromagnetic waves and currents, and whether the conductive layer below the antenna is disposed with a window can be adjusted according to actual needs.

In the above glass assembly, the window extends through the conductive layer in which the window is located along the z-axis.

In the present disclosure, the "upward" direction of the z-axis is defined as a direction in which a signal is emitted from the antenna, and the same applies to a definition of an "upper side". For example, for a glass assembly in which the antenna is located on the third surface and the conductive layer is disposed on the second surface and the fourth surface, if the direction in which a signal is emitted from the antenna is from the fourth surface to the second surface, the conductive layer disposed on the second surface is above the antenna along the z-axis, and the conductive layer disposed on the fourth surface is below the antenna along the z-axis, and the window needs to be opened in at least the conductive layer disposed on the second surface. If the direction in which a signal is emitted from the antenna is from the second surface to the fourth surface, the conductive layer disposed on the second surface is below the antenna along the z-axis, and the conductive layer disposed on the fourth surface is above the antenna along the z-axis, and the window needs to be opened in at least the conductive layer disposed on the fourth surface.

According to a specific embodiment of the present disclosure, when there are two or more windows in the glass assembly, an orthographic projection of the antenna onto each window above the antenna along the z-axis is within an opening range of the corresponding window.

According to a specific embodiment of the present disclosure, the first window is the window that has the smallest vertical distance from the antenna along the z-axis direction (the direction in which a signal is emitted from the antenna). Specifically, when the conductive layer is disposed on the xy plane in which the antenna is located, the vertical distance between the conductive layer and the antenna is 0, and therefore, the window of the conductive layer is used as the first window. When no conductive layer is disposed on the xy plane in which the antenna is located, the window of the conductive layer that is above the antenna along the z-axis and has the smallest vertical distance from the antenna is used as the first window. For example, for a glass assembly in which the antenna is located on the third surface and each of the conductive layers of the second surface and the fourth surface is disposed with a window, if the direction in which a signal is emitted from the antenna (that is, the upward direction of the z-axis) is from the second glass plate to the first glass plate (that is, from the fourth surface to the first surface), the window of the second surface is the first window. If the direction in which a signal is emitted from the antenna is from the first glass plate to the second glass plate (that is, from the first surface to the fourth surface), the window of the fourth surface is the first window.

In the present disclosure, the first window opened in the conductive layer is used to, on the one hand, reduce or eliminate interference of a conductive material in the conductive layer on signal propagation, and on the other hand, to constrain a propagation direction of the signal. A dimension of the first window is designed according to an implementation method and an operating frequency of the antenna. In the present disclosure, it was found that by controlling the dimension of the first window within a certain range, the first window can fully exert a constraining effect on electromagnetic waves and currents, thereby improving a radiation efficiency of the antenna. In combination with the above-mentioned functions of the conductive layer, it can be understood that when the antenna has an inwardly concave edge and the shape of the first window is different from the shape of the antenna, a minimum distance between each point on an edge of an orthographic projection of the antenna onto the first window and an edge of the first window is, a minimum distance between each point on a non-concave edge of an orthographic projection of the antenna onto the first window and the edge of the first window.

According to a specific embodiment of the present disclosure, when the antenna is a monopole antenna, an orthographic projection of the monopole antenna onto the first window falls within the opening range of the first window, and the entire edge of the orthographic projection do not overlap the entire edge of the first window.

In some specific embodiments, the minimum distance between each point on the edge of the orthographic projection of the monopole antenna onto the first window and the edge of the first window is generally controlled to be greater than 0.051 to 0.162 times a wavelength λ corresponding to a designed frequency band of the monopole antenna (for example, 0.051 to 0.162 times the wavelength corresponding to the designed frequency), and can be further controlled to be greater than 0.051 times the wavelength and less than 0.162 times the wavelength, and can be still further controlled to be from 0.083 to 0.135 times the wavelength. Specifically, the minimum distance may be specific values such as 0.051 times, 0.055 times, 0.060 times, 0.065 times, 0.070 times, 0.075 times, 0.080 times, 0.083 times, 0.085 times, 0.090 times, 0.095 times, 0.100 times, 0.105 times, 0.110 times, 0.115 times, 0.120 times, 0.125 times, 0.130 times, 0.135 times, 0.140 times, 0.145 times, 0.150 times, 0.155 times, 0.160 times, and 0.162 times the wavelength, and may be a range with any two of the above specific values as endpoints.

According to a specific embodiment of the present disclosure, an orthographic projection of the loop antenna onto the first window does not exceed the edge of the first window. In this case, the edge of the orthographic projection of the loop antenna onto the first window may overlap at least a part of the edge of the first window (in this case, the distance between the edges may be equal to 0), or the orthographic projection of the loop antenna onto the first window may completely fall within the first window, and the orthographic projection does not overlap any point of the edge of the first window.

In some specific embodiments, a minimum distance between each point on the edge of the orthographic projection of the loop antenna onto the first window and the edge of the first window is equal to or less than 0.162 times a wavelength λ corresponding to a designed frequency band of the loop antenna (for example, equal to or less than 0.162 times the wavelength corresponding to the designed frequency). For example, the minimum distance may be less than 0.162 times the wavelength. Specifically, the minimum distance between each point on the edge of the orthographic projection of the loop antenna onto the first window and the edge of the first window may be specific values such as 0.001 times, 0.002 times, 0.003 times, 0.004 times, 0.005 times, 0.006 times, 0.007 times, 0.008 times, 0.009 times, 0.010 times, 0.020 times, 0.030 times, 0.040 times, 0.050 times, 0.060 times, 0.070 times, 0.080 times, 0.090 times, 0.100 times, 0.150 times, 0.160 times, 0.162 times the wavelength λ corresponding to the designed frequency band of the loop antenna, and may be a range with any two of the above specific values as endpoints.

According to a specific embodiment of the present disclosure, for two adjacent windows in the z-axis direction (the "adjacent" means that there is no other window between the two windows, but there may be a non-conductive layer structure such as an adhesive layer between the two windows), the window located above along the z-axis is denoted as a window A, and the window located below is denoted as a window B (and the emission direction of the antenna is from the window B to the window A). An orthographic projection of the window B onto the window A is within an opening range of the window A, and an edge of the orthographic projection does not overlap an edge of the window A. Therefore, an opening range of the window located above along the z-axis is greater than an opening range of the window located below. That is, a lateral dimension of each window in the glass assembly (referring to a dimension of the windows along the xy plane direction, including but not limited to length, width, diameter, and the like) increases from the lower side to the upper side along the z-axis.

In the above-mentioned glass assembly, the glass assembly has two or more windows, and the window in the laminated glass located above the first window along the z-axis is denoted as the second window.

In some specific embodiments, half of a lateral dimension of the first window along the xy plane is denoted as L1, and half of a lateral dimension of the second window along the xy plane (in the same direction as the lateral dimension of the first window) is denoted as L2. A relationship between L1 and L2 satisfies L2 ≥ L1 + 0.58 × Δh, in which Δh is the vertical distance between the second window and the first window along the z-axis.

It can be understood that there is generally one first window in each glass assembly, and there may be one or more second windows, and the lateral dimension between each second window and the first window satisfies L2 ≥ L1 + 0.58 × Δh, wherein Δh is the vertical distance between each second window and the first window along the z-axis, L1 is half of the lateral dimension of the first window, and L2 is half of the lateral dimension of each second window.

In the above-mentioned glass assembly, a minimum distance between each point on an edge of an orthographic projection of the monopole antenna onto the second window and an edge of the second window is form 0.457 to 0.701 times the wavelength corresponding to the designed frequency band of the monopole antenna (for example, 0.457 times to 0.701 times the wavelength corresponding to the designed frequency), and can be further controlled to be greater than 0.457 times the wavelength and less than 0.701 times the wavelength, and can be still further controlled to be from 0.458 to 0.699 times the wavelength. Specifically, the minimum distance may be specific values such as 0.457 times, 0.458 times, 0.459 times, 0.460 times, 0.470 times, 0.480 times, 0.490 times, 0.500 times, 0.550 times, 0.600 times, 0.650 times, 0.660 times, 0.670 times, 0.680 times, 0.690 times, 0.698 times, 0.699 times, 0.700 times, and 0.701 times the wavelength, and may be a range with any two of the above specific values as endpoints.

In the above-mentioned glass assembly, a minimum distance between each point on an edge of an orthographic projection of the loop antenna onto the second window and the edge of the second window is from 0.162 to 0.701 times the wavelength corresponding to the designed frequency band of the loop antenna (for example, 0.162 to 0.701 times the wavelength corresponding to the designed frequency), and can be further controlled to be greater than 0.162 times the wavelength and less than 0.701 times the wavelength. Specifically, the minimum distance may be specific values such as 0.162 times, 0.165 times, 0.170 times, 0.180 times, 0.190 times, 0.200 times, 0.250 times, 0.300 times, 0.350 times, 0.400 times, 0.450 times, 0.500 times, 0.550 times, 0.600 times, 0.650 times, 0.700 times, and 0.701 times the wavelength, and may be a range with any two of the above specific values as endpoints.

The present disclosure has no special limitation on a shape of each window in the conductive layer, which can be a regular shape or an irregular shape. For example, when the antenna is a monopole antenna, the window may be rectangular, and when the antenna is a loop antenna, the window may be circular or elliptical. In a specific embodiment, the shape of the window can be the same as or close to an outer contour of the antenna, thereby improving the radiation effect of the antenna.

According to a specific embodiment of the present disclosure, the conductive layer contains a metal element, and may be, for example, a metal film layer. The conductive layer includes one or a combination of two or more of a sound insulation film, a heat insulation film, and a dimming film. Specifically, the conductive layer may include a silver-plated film, a Low-E film (low-emissivity film), and the like.

According to a specific embodiment of the present disclosure, the adhesive layer is used to adhere the first glass plate to the second glass plate. In some specific embodiments, the adhesive layer may be made of PVB (polyvinyl butyral), EVA (ethyl vinyl acetate copolymer), or the like.

In the above-mentioned glass assembly, the conductive layer with a window can cooperate with the antenna, and the conductive layer itself may not interfere with the propagation of signals from the antenna, but can serve as a functional layer to improve radiation performance of the antenna. In the present disclosure, the first window is a main window for improving the antenna performance, and the second window can assist the first window. Specifically, by constructing the first window at a position corresponding to a propagation direction of the signals from the antenna in the conductive layer, a propagation path of electromagnetic waves (signals) can be constrained without affecting the function of the conductive layer itself, and a dispersed distribution of currents in dielectric materials such as glass can be suppressed, thereby guiding the electromagnetic waves to radiate efficiently in a specific propagation direction and a specific area, and improving the efficiency and stability of the radiation of the antenna. By constructing the second window at a position corresponding to the propagation direction of signals from the antenna in the conductive layer, a shielding effect of the conductive layer on transmission of signals from the antenna can be avoided, and instability of the antenna can be reduced.

The present disclosure further provides a vehicle, and glass of the vehicle includes the glass assembly disposed by the present disclosure. Accordingly, the antenna in the glass assembly may be a vehicle-mounted mobile antenna and the like. In some specific embodiments, when the glass assembly above is mounted on the vehicle, the first surface generally faces the outside of the vehicle, and the fourth surface generally faces the inside of the vehicle.

Beneficial effects of the present disclosure includes:
The glass assembly disposed by the present disclosure can constrain the propagation path of electromagnetic waves radiated by the antenna by opening a window in the conductive layer, and can also suppress dispersion of currents in dielectric materials such as glass, thereby guiding the electromagnetic waves to radiate efficiently in a specific propagation direction and a specific area, and directly utilizes a synergistic effect between the conductive layer and the antenna to significantly improve the efficiency and stability of the antenna radiation without affecting the functions of the film layer itself. The glass assembly has a simple structure, can be mass-produced, and can be widely used in an intelligent and connected vehicle manufacturing industry.

### BRIEF DESCRIPTION OF DRAWINGS

FIG. 1 is a schematic diagram of a three-dimensional structure of a glass assembly of the present disclosure, in which an antenna is omitted.
FIG. 2 is a schematic diagram of a structure of a glass assembly of Embodiment 1 on an xz plane.
FIG. 3 is a schematic diagram of relative positions of an antenna, a first window, and a second window in the glass assembly of Embodiment 1 on an xy plane.
FIG. 4 is a schematic diagram of a structure of a glass assembly of Embodiment 2 on the xz plane.
FIGS. 5a and 5b are schematic diagrams of relative positions of an antenna, a first window, and a second window in the glass assembly of Embodiment 2 on the xy plane.
FIG. 6 is a schematic diagram of a structure of a glass assembly of Embodiment 3 on the xz plane.
FIG. 7 is a schematic diagram of structures of an antenna, a first window, and a second window in a glass assembly to be tested of Test Embodiment 1 on the xy plane.
FIG. 8 shows a performance test result of glass assemblies with different dimensions of the first window in Test Embodiment 1.
FIG. 9 shows a performance test result of glass assemblies with different dimensions of the second window in Test Embodiment 1.
FIG. 10 shows a performance test result of a glass assembly of Test Embodiment 2.

### Main Reference Signs List:

First glass plate 1, adhesive layer 2, conductive layer 3, second glass plate 4, antenna 5, first conductive layer 31, second conductive layer 32, third conductive layer 33, first surface 11, second surface 12, third surface 41, and fourth surface 42.
First window 301, second window 302, second window 3021, and second window 3022.

### DETAILED DESCRIPTION

In order to more clearly understand technical features, objectives, and beneficial effects of the present disclosure, technical solutions of the present disclosure maybe described in detail below, but these technical solutions cannot be understood as limitations on the scope of implementation of the present disclosure.

In the present disclosure, it is understood that the terms "first", "second", and the like are used for descriptive purposes only and cannot be understood as indicating or implying relative importance or implicitly indicating the number of the indicated technical features. Therefore, the features defined as "first", "second", and the like may explicitly or implicitly include one or more of the features.

In the present disclosure, an orthographic projection of A onto an window B being within an opening range of the window B means that the orthographic projection of A does not exceeds the opening range of the window B, and an edge of the orthographic projection of A onto the window B does not exceed an edge of the window B. Specifically, the orthographic projection of A may be completely within the window B, in which case the entire edge of the orthographic projection of A does not overlap the edge of the window B, or at least a part of the edge of the orthographic projection of A may overlap a part of the edge of the window B, and the remaining part of A may be within the window B.

The drawings of the present disclosure are used to illustrate positional relationships among various structures. For the convenience of description, dimensions of some structures illustrated in the drawings are not drawn according to actual proportional relationships and are not used to illustrate the actual proportional relationships between the dimensions.

### Embodiment 1

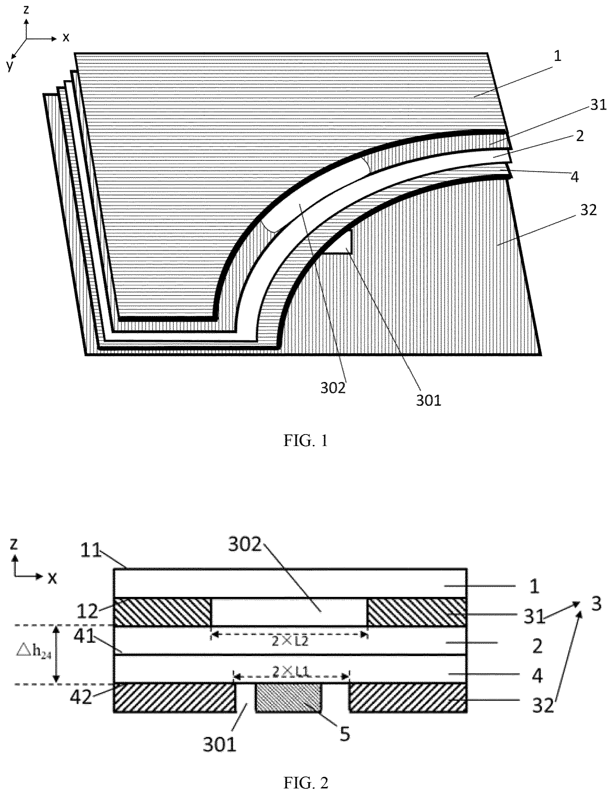

The present embodiment provides a glass assembly, and FIGS. 1 and 2 are schematic diagrams of a structure of the glass assembly. As shown in FIGS. 1 and 2, the glass assembly includes a glass body, an adhesive layer 2, a conductive layer 3, and an antenna 5. The glass body includes a first glass plate 1 and a second glass plate 4.

The first glass plate 1 has a first surface 11 and a second surface 12 facing opposite directions, the second glass plate 4 has a third surface 41 and a fourth surface 42 facing opposite directions, and the second surface 12 faces the third surface 41. The first surface 11, the second surface 12, the third surface 41, and the fourth surface 42 are all surfaces of the glass body.

The adhesive layer 2 is located between the second surface 12 of the first glass plate 1 and the third surface 41 of the second glass plate 4, and is used to adhere the first glass plate 1 to the second glass plate 4. In the present embodiment, the adhesive layer 2 is made of Polyvinyl Butyral (PVB) (it should be understood that the adhesive layer 2 is not limited to being made of PVB).

The antenna 5 is provided on the fourth surface 42.

The antenna 5 used in the present embodiment is a monopole antenna, and a radiation frequency of the monopole antenna is 700 MHz to 5 GHz. In the present embodiment, a direction in which a signal is emitted is from the antenna 5 is a direction from the second glass plate 4 to the first glass plate 1 along a thickness direction of the glass assembly, that is, from a lower side to an upper side in FIG. 2. The signal emission direction is denoted as an upward direction of a z-axis.

As illustrated in FIG. 2, the conductive layer 3 includes a first conductive layer 31 and a second conductive layer 32. The first conductive layer 31 is located on the second surface 12 and is in contact with the adhesive layer 2. The second conductive layer 32 is located on the fourth surface 42.

The second conductive layer 32 is provided with a first window 301, and the first window 301 extends through the second conductive layer 32 along the z-axis.

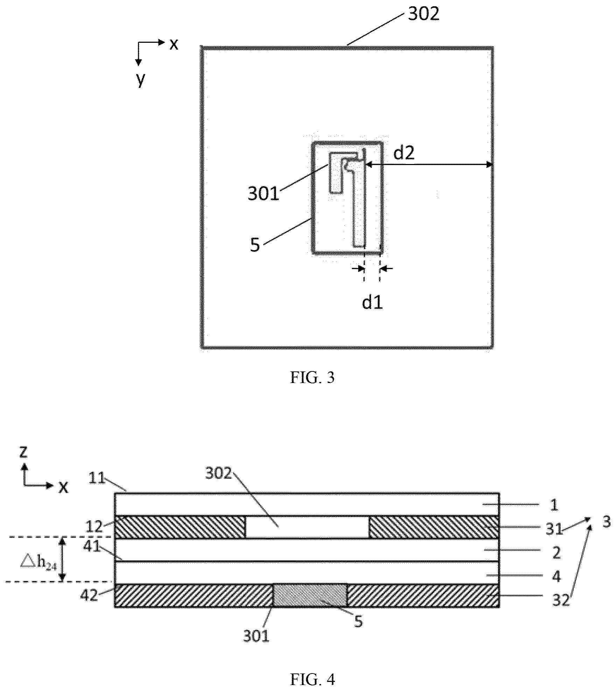

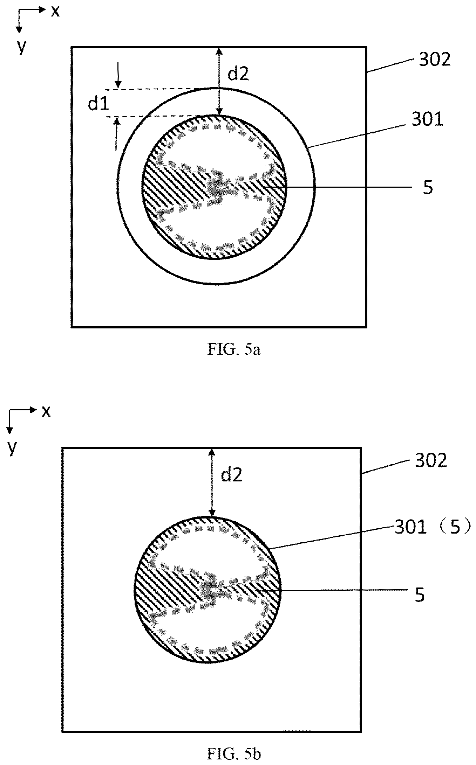

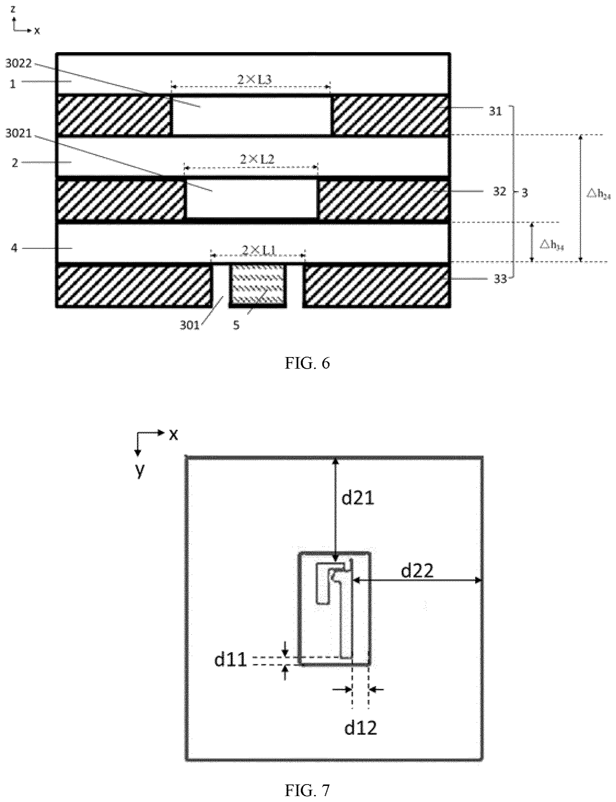

As illustrated in FIG. 3, the antenna 5 is located inside the first window 301. Specifically, the first window 301 of the present embodiment is rectangular, and a wavelength corresponding to a designed frequency band of the antenna 5 is denoted as λ, and a minimum distance d1 between each point on an edge of an orthographic projection of the antenna 5 onto the first window 301 and an edge of the first window 301 is 0.051λ, to 0.162λ. The antenna 5 in FIG. 3 is only used to illustrate a positional relationship thereof, and is not used to describe an exact shape of the antenna (the same applies to FIG. 5a, FIG. 5b, and FIG. 7).

The first conductive layer 31 is provided with a second window 302, and the second window 302 extends through the first conductive layer 31 along the z-axis.

An orthographic projection of the antenna 5 onto the second window 302 is within an opening range of the second window 302, and an entire edge of the orthographic projection does not overlap an edge of the second window 302. An orthographic projection of the first window 301 onto the second window 302 is within the opening range of the second window 302, and an area of the second window 302 is greater than an area of the first window 301. The second window 302 of the present embodiment is square. A minimum distance d2 between each point on the edge of the orthographic projection of the antenna 5 onto the second window 302 and the edge of the second window 302 is 0.457λ to 0.701λ.

A dimension relationship between the first window 301 and the second window 302 satisfies L2 ≥ L1 + 0.58 × Δh₂₄, where Δh₂₄ is a vertical distance between the first window 301 and the second window 302 along the z-axis, L1 is half of a lateral dimension of the first window 301 along an xy plane, and L2 is half of a lateral dimension of the second window 302 along the xy plane (in the same direction as L1).

The present embodiment also provides a vehicle, and the vehicle includes the above-mentioned glass assembly.

It can be understood that when the signal emission direction of the antenna is the direction from the first glass plate 1 to the second glass plate 4 along the thickness direction of the glass (that is, from the upper side to the lower side in FIG. 2), corresponding adjustments can be made with reference to the above description. Specifically, in this case, the antenna 5 may be provided in the window of the first conductive layer 31, and the window is used as the first window 301, and the window in the second conductive layer 32 is used as the second window 302. The minimum distance between each point on the edge of the orthographic projection of the antenna 5 onto the first window 301 and the edge of the first window 301 is 0.051λ to 0.162λ. The dimension relationship between the first window 301 and the second window 302 still satisfies L2 ≥ L1 + 0.58 × Δh₂₄, in which Δh₂₄ is the vertical distance between the first window 301 and the second window 302 along the z-axis, L1 is half of the lateral dimension of the first window 301 along the xy plane, and L2 is half of the lateral dimension of the second window 302.

### Embodiment 2

The present embodiment provides a glass assembly, and FIG. 4 is a schematic diagram of a structure of the glass assembly. The glass assembly of the present embodiment and the glass assembly of Embodiment 1 are similar to each other in structure, and are different in the type of the antenna 5, and shapes and dimensions of the first window 301 and the second window 302.

In the present embodiment, the antenna 5 is a loop antenna operating in the radiation frequency band of 1710 MHz to 5 GHz. A signal emission direction of the antenna (that is, the z-axis direction) is the same as that of Embodiment 1.

As shown in FIG. 5a, the first window 301 of the present embodiment is circular. A wavelength corresponding to a designed frequency band of the antenna 5 is denoted as λ, and a minimum distance d1 between each point on an edge of an orthographic projection of the antenna 5 onto the first window 301 and an edge of the first window 301 is greater than 0 and equal to or less than 0.162λ. The minimum distance d1 between each point on the edge of the orthographic projection of the antenna 5 onto the first window 301 and the edge of the first window 301 may also be 0, in which case the edge of the first window 301 overlaps the edge of the orthographic projection of the antenna 5 onto the first window 301, as illustrated in FIG. 4 and FIG. 5b.

The second window 302 of the present embodiment is square. As illustrated in FIG. 5a and FIG. 5b, a minimum distance d2 between each point on an edge of an orthographic projection of the antenna 5 onto the second window 302 and an edge of the second window 302 is 0.162λto 0.701λ.

Half of a lateral dimension of the first window along the xy plane is denoted as L1, and half of a lateral dimension of the second window along the xy plane is denoted as L2, the relationship between L1 and L2 satisfies :L2 ≥ L1 + 0.58 × Δh₂₄, where Δh₂₄ is a vertical distance between the first window 301 and the second window 302 along the z-axis.

### Embodiment 3

The present embodiment provides a glass assembly, and FIG. 6 is a schematic diagram of a structure of the glass assembly.

As illustrated in FIG. 6, the glass assembly includes the glass body, the adhesive layer 2, the conductive layer 3, and the antenna 5. The glass body includes the first glass plate 1 and the second glass plate 4.

Similar to Embodiment 1, the first glass plate 1 has a first surface and a second surface facing opposite directions, the second glass plate 4 has a third surface and a fourth surface facing opposite directions, and the second surface faces the third surface. The first surface, the second surface, the third surface, and the fourth surface are all surfaces of the glass body.

The adhesive layer 2 is located between the second surface of the first glass plate 1 and the third surface of the second glass plate 4, and is used to adhere the first glass plate 1 to the second glass plate 4.

The antenna 5 is provided on the fourth surface 42. The antenna 5 may be a monopole antenna or a loop antenna.

A direction in which a signal is emitted is from the antenna 5 of the present embodiment is a direction from the second glass plate 4 to the first glass plate 1 along a thickness direction of the glass assembly, that is, from the lower side to the upper side in FIG. 6. The signal emission direction is denoted as the upward direction of the z-axis.

The conductive layer 3 includes a first conductive layer 31, a second conductive layer 32, and a third conductive layer 33. The first conductive layer 31 is located between the second surface and the adhesive layer 2, the second conductive layer 32 is located between the adhesive layer 2 and the third surface of the second glass plate 4, and the third conductive layer 33 is located on the fourth surface of the second glass plate 4.

The third conductive layer 33 is provided with the first window 301, and the first window 301 extends through the third conductive layer 33 along the z-axis.

The antenna 5 is located inside the first window 301. The first window 301 of the present embodiment is rectangular, and a wavelength corresponding to a designed frequency band of the antenna 5 is denoted as λ. When the antenna 5 is a monopole antenna, a minimum distance between each point on an edge of an orthographic projection of the antenna 5 onto the first window 301 and an edge of the first window 301 is 0.051λ to 0.162λ. When the antenna 5 is a loop antenna, a minimum distance between each point on an edge of an orthographic projection of the antenna 5 onto the first window 301 and the edge of the first window 301 is equal to or greater than 0 and equal to or less than 0.162λ.

The second conductive layer 32 is provided with a second window 3021, and the second window 3021 extends through the second conductive layer 32 along the z-axis.

An orthographic projection of the antenna 5 onto the second window 3021 is within an opening range of the second window 3021, and all of an edge of the orthographic projection does not overlap an edge of the second window 3021. An orthographic projection of the first window 301 onto the second window 3021 is within the opening range of the second window 3021, and an area of the second window 3021 is greater than an area of the first window 301. A shape of the second window 3021 is not limited, and can be a regular shape such as a rectangle, a square, or a circle. When the antenna 5 is a monopole antenna, a minimum distance between each point on the edge of the orthographic projection of the antenna 5 onto the second window 3021 and the edge of the second window 3021 is 0.457λ to 0.701λ. When the antenna 5 is a loop antenna, a minimum distance between each point on the edge of the orthographic projection of the antenna 5 onto the second window 3021 and the edge of the second window 3021 is 0.162λ to 0.701λ,

A dimension relationship between the first window 301 and the second window 3021 satisfies L2 ≥ L1 + 0.58 × Δh₃₄ in which Δh₃₄ is a vertical distance between the first window 301 and the second window 3021 along the z-axis, L1 is hhalf of a lateral dimension of the first window 301 along the xy plane, and L2 is half of a lateral dimension of the second window 3021 along the xy plane.

The first conductive layer 31 is provided with a second window 3022, and the second window 3022 extends through the first conductive layer 31 along the z-axis.

An orthographic projection of the antenna 5 onto the second window 3022 is within an opening range of the second window 3022, and all of an edge of the orthographic projection does not overlap an edge of the second window 3022. The orthographic projection of the second window 3021 onto the second window 3022 is within the opening range of the second window 3022, and an area of the second window 3022 is greater than the area of the second window 3021. A shape of the second window 3022 is not particularly limited, and can be a regular shape such as a rectangle, a square, or a circle. When the antenna 5 is a monopole antenna, a minimum distance between each point on the edge of the orthographic projection of the antenna 5 onto the second window 3022 and the edge of the second window 3022 is 0.457λ to 0.701λ. When the antenna 5 is a loop antenna, a minimum distance between each point on the edge of the orthographic projection of the antenna 5 onto the second window 3022 and the edge of the second window 3022 is 0.162λ to 0.701λ.

A dimension relationship between the first window 301, the second window 3021, and the second window 3022 satisfies L3 ≥ L1 + 0.58 × Δh₂₄, and L3 > L2, where Δh₂₄ is a vertical distance between the first window 301 and the second window 3022 along the z-axis, L1 is half of a lateral dimension of the first window 301 along the xy plane, and L3 is half of a lateral dimension of the second window 3022 along the xy plane.

It is understandable that if the antenna 5 in FIG. 6 is located on the third surface, and other layer structures in the glass assembly remain unchanged, it is necessary to open windows in at least the first conductive layer 31 and the second conductive layer 32, in which the window of the first conductive layer 31 is the second window 302, and the window of the second conductive layer 32 is the first window 301. In this case, a dimension relationship between the first window, the second window, and the antenna maybe determined with reference to the above description.

### Test Embodiment 1

The present test embodiment provides a radiation efficiency performance test experiment for a glass assembly including a monopole antenna.
(1) A structure of a first group of glass assemblies to be tested is the same as that of the glass assembly of Embodiment 1. The first window of the first group of glass assemblies to be tested is rectangular. Here, d11 and d12 are respectively minimum distances between two points on the edge of the orthographic projection of the antenna 5 onto the first window 301 and the edge of the first window 301, and d21 and d22 are respectively minimum distances between two points on the edge of the orthographic projection of the antenna 5 onto the second window 302 and the edge of the second window 302. Referring to FIG. 7, the dimension of the first window of each sample is as follows.
   Sample 1: width × length of rectangle is 50 mm × 110 mm, d11 = 0.083λ, d12 = 0.023λ.
   Sample 2: width × length of rectangle is 75 mm× 110 mm, d11 = 0.083λ, d12 = 0.135λ.
   Sample 3: width × length of rectangle is 110 mm × 110 mm, d11 = 0.083λ, d12 = 0.293λ.
   Sample 4: width × length of rectangle is 250 mm × 250 mm, d11 = 0.715λ, d12 = 0.924λ.

In the above samples, other minimum distances (except d11 and d12) between points on the edge of the orthographic projection of the antenna 5 onto the first window 301 and the edge of the first window 301 are 0.051λ to 0.162λ.

The second windows of Samples 1 to 4 have the same shape and dimension. The second windows are square, and the dimension thereof is d21 = 0.458λ, d22 = 0.699λ.

Among Samples 1 to 4, only Sample 2 satisfies that the minimum distance between each point on the orthographic projection of the antenna 5 onto the first window 301 and the edge of the first window 301 is 0.051λ to 0.162λ, the orthographic projection of the first window 301 onto the second window 302 is within the opening range of the second window 302, and L2 ≥ L1 + 0.58 × Δh₂₄ (L1 is half of the lateral dimension of the first window along the xy plane, L2 is half of the lateral dimension of the second window along the xy plane, and Δh₂₄ is a vertical distance between the first window 301 and the second window 302 along the z-axis).

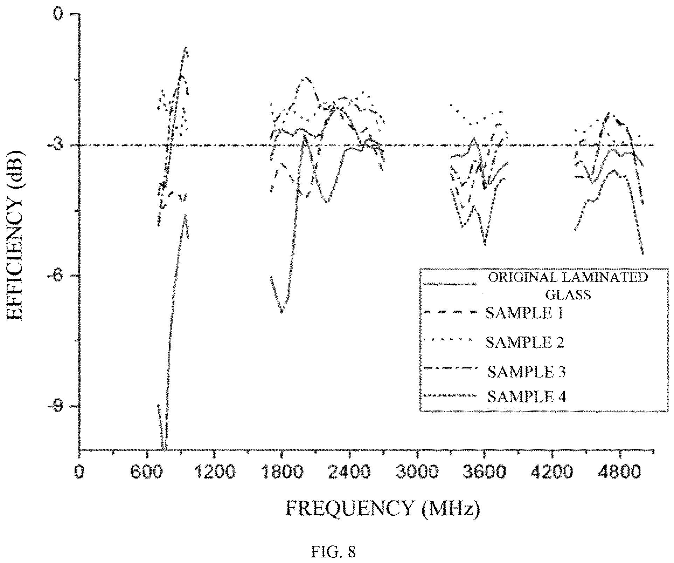

Test results are shown in FIG. 8. An "original laminated glass" in FIG. 8 is similar to the glass assembly of Embodiment 1, except that all conductive layers in the original laminated glass are without windows. It can be seen that when the dimension of the first window of Sample 2 is used, the antenna radiation performance in the glass assembly is the best, and an efficiency thereof can be controlled within -3 dB.

(2) A structure of a second group of glass assemblies to be tested is the same as that of the glass assembly of Embodiment 1. The first window of the second group of glass assemblies to be tested is rectangular and the second window is square. Here, d11 and d12 are respectively minimum distances between two points on the edge of the orthographic projection of the antenna 5 onto the first window 301 and the edge of the first window 301, and d21 and d22 are respectively minimum distances between two points on the edge of the orthographic projection of the antenna 5 onto the first window 301 and the edge of the first window 301. Referring to FIG. 7, the dimension of the second window of each sample is as follows.
Sample 5: width × length of square is 150 mm × 151 mm, d21 = 0.232λ, d22 = 0.473λ.
Sample 6: width × length of square is 200 mm × 200 mm, d21 = 0.458λ, d22 = 0.698λ.

In the above samples, other minimum distances (except d21 and d22) between points on the edge of the orthographic projection of the antenna 5 onto the second window 302 and the edge of the second window 302 are 0.457λ to 0.701λ.

The shapes and dimensions of the first windows of Sample 5 and Sample 6 are the same. The shapes of the first windows are rectangular, and the dimensions thereof are d11 = 0.083λ, d12 = 0.135λ.

Among Samples 5 and 6, only Sample 6 satisfies that the minimum distance between each point on the orthographic projection of the antenna 5 onto the second window 302 and the edge of the second window 302 is 0.457λ to 0.701λ, the orthographic projection of the first window 301 onto the second window 302 is within the opening range of the second window, and L2 ≥ L1 + 0.58 × Δh₂₄ (L1 is half of the lateral dimension of the first window along the xy plane, L2 is half of the lateral dimension of the second window along the xy plane, and Δh₂₄ is a vertical distance between the first window 301 and the second window 302 along the z-axis).

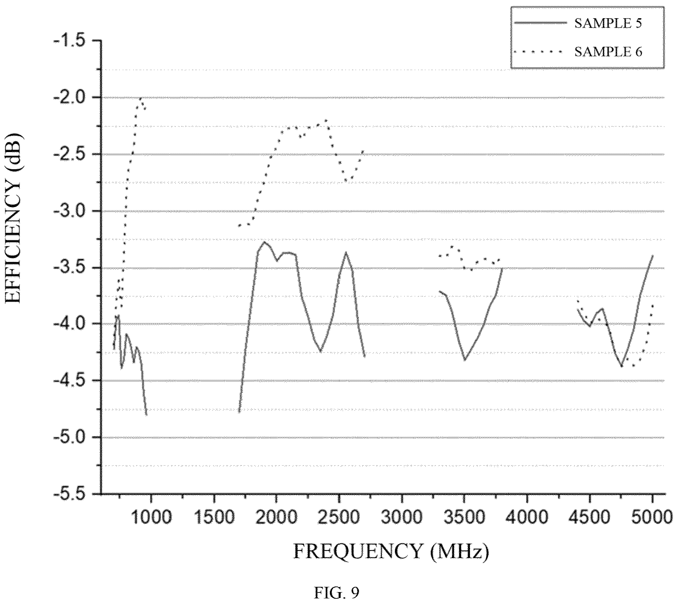

Test results of the second group of glass assemblies to be tested are shown in FIG. 9. It can be seen that as compared with the dimension of the second window of Sample 5, when the dimension of the second window of Sample 6 is adopted, the antenna radiation performance of the glass assembly is further improved.

The above test results indicate that when the dimensions of the first window and the second window are controlled within the exemplary ranges defined in the present disclosure, the antenna radiation performance of the glass assembly can be effectively improved.

### Test Embodiment 2

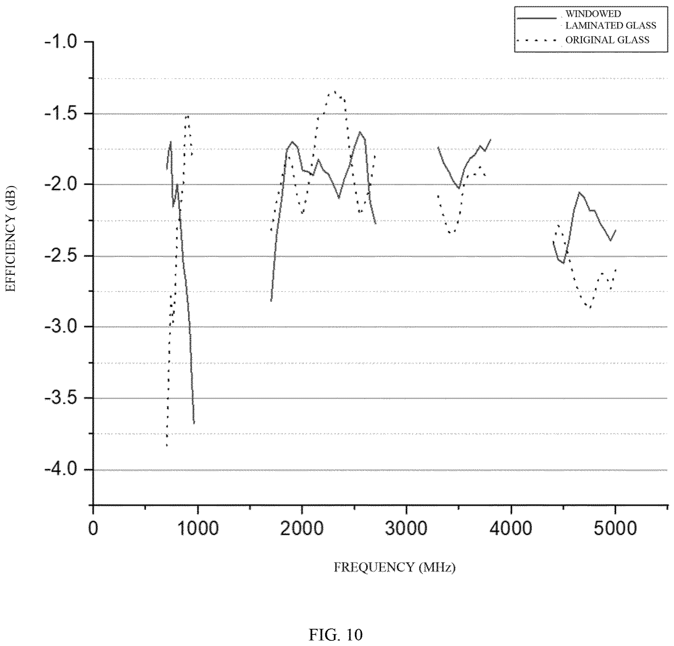

The present test embodiment provides a test experiment for an influence of the conductive layer on the radiation performance of the antenna in the glass assembly. The test method is the same as that in Test Embodiment 1, and test results are summarized in FIG. 10.

A "windowed laminated glass" in FIG. **10** is the glass assembly of Sample 2. The structure of an "original glass" sample in FIG. 10 is similar to the structure of Sample 2, except that all conductive layers of the "original glass" sample have no windows.

It can be seen from the results of FIG. 10 that, as compared with the glass assembly without windows, the glass assembly provided by the present disclosure has better radiation efficiency.

The above results can demonstrate that: by disposing windows in conductive layers such as metal films of the glass assembly, the present disclosure effectively eliminates signal shielding and dispersion effect of the conductive layers on the antenna radiation signals, and at the same time can significantly enhancing antenna radiation efficiency, so as to improve the performance of the antenna.

## Claims

1. A glass assembly, comprising:
a glass body;
an antenna (5); and
at least one conductive layer (3), wherein
the antenna (5) is disposed on a surface of the glass assembly or at least partially embedded inside the glass assembly, and the conductive layer (3) is disposed on the surface of the glass assembly and/or at least partially embedded inside the glass assembly,
a direction in which a signal is emitted from the antenna (5) is set as an upward direction of a z-axis, a plane in which the antenna (5) is located is an xy plane formed by an x-axis and a y-axis, and the conductive layer (3) coplanar with the antenna (5) in the xy plane and the conductive layer (3) located above the antenna (5) along the z-axis are provided with a window, and an orthographic projection of the antenna (5) onto the window is within an opening range of the window,
the antenna (5) comprises a monopole antenna and/or a loop antenna,
the window of the conductive layer (3) that has a smallest vertical distance from the antenna (5) along the z-axis is denoted as a first window (301),
a minimum distance between each point on an edge of an orthographic projection of the monopole antenna onto the first window (301) and an edge of the first window (301) is from 0.051 to 0.162 times a wavelength corresponding to a designed frequency band of the monopole antenna, and
a minimum distance between each point on an edge of an orthographic projection of the loop antenna onto the first window (301) and the edge of the first window (301) is less than or equal to 0.162 times a wavelength corresponding to a designed frequency band of the loop antenna.

2. The glass assembly according to claim 1, wherein
the glass body comprises a first glass plate (1) and a second glass plate (4), the first glass plate (1) has a first surface (11) and a second surface (12) facing opposite directions, the second glass plate (4) has a third surface (41) and a fourth surface (42) facing opposite directions, and the second surface (12) and the third surface (41) face each other,
the antenna (5) is disposed adjacent to the fourth surface (42) of the glass assembly or between the second surface (12) and the third surface (41), and
the conductive layer (3) is disposed adjacent to the fourth surface (42) of the glass assembly, and/or the conductive layer (3) is disposed between the second surface (12) and the third surface (41).

3. The glass assembly according to claim 1, wherein
the window extends through the conductive layer (3) in which the window is located along the z-axis.

4. The glass assembly according to claim 1, wherein
the minimum distance between each point on the edge of the orthographic projection of the monopole antenna onto the first window (301) and the edge of the first window (301) is from 0.083 to 0.135 times the wavelength corresponding to the designed frequency band of the monopole antenna.

5. The glass assembly according to claim 1, wherein
for two adjacent windows in a z-axis direction, the window on an upper side along the z-axis is denoted as a window A, and the window on a lower side is denoted as a window B, an orthographic projection of the window B onto the window A is within an opening range of the window A, and an edge of the orthographic projection does not overlap an edge of the window A.

6. The glass assembly according to claim 5, wherein
the glass assembly has two or more windows, and the window above the first window (301) along the z-axis in the glass assembly is denoted as a second window (302), and
half of a lateral dimension of the first window (301) along the xy plane is denoted as L1, and half of a lateral dimension of the second window (302) along the xy plane is denoted as L2, and
a relationship between L1 and L2 satisfies L2 ≥ L1 + 0.58 × Δh, where Δh is a vertical distance between the second window (302) and the first window (301) along the z-axis.

7. The glass assembly according to claim 6, wherein
a minimum distance between each point on an edge of an orthographic projection of the monopole antenna onto the second window (302) and an edge of the second window (302) is from 0.457 to 0.701 times the wavelength corresponding to the designed frequency band of the monopole antenna.

8. The glass assembly according to claim 7, wherein
the minimum distance between each point on the edge of the orthographic projection of the monopole antenna onto the second window (302) and the edge of the second window (302) is from 0.458 to 0.699 times the wavelength corresponding to the designed frequency band of the monopole antenna.

9. The glass assembly according to claim 6, wherein
a minimum distance between each point on an edge of an orthographic projection of the loop antenna to the second window (302) and the edge of the second window (302) is from 0.162 to 0.701 times the wavelength corresponding to the designed frequency band of the loop antenna.

10. A vehicle, comprising the glass assembly according to any one of claims 1 to 9.
